# EUROPÄISCHE PATENTSCHRIFT

(11) **EP 1 335 144 B1**
(45) Veröffentlichungstag und Bekanntmachung des Hinweises auf die Patenterteilung: **04.04.2012**
(21) Anmeldenummer: 03000285.1
(22) Anmeldetag: 09.01.2003
(51) Int. Cl.: F16D 51/00, F16D 55/00

(54) **Bremsträgeranordnung**
Brake support assembly
Ensemble de support de frein

(30) Priorität: 25.01.2002 DE 10202778
(43) Veröffentlichungstag der Anmeldung: 13.08.2003
(73) Patentinhaber: BPW Bergische Achsen Kommanditgesellschaft, 51674 Wiehl (DE)
(72) Erfinder: Ebert, Jörg, Dr. Ing., 50850 Köln (DE)
(74) Vertreter: Christophersen & Partner

(56) Entgegenhaltungen:
- WO-A-01/42676
- US-A- 4 452 347
- US-B1- 6 305 509

## Beschreibung

Die Erfindung betrifft eine zweiteilig aufgebaute Bremsträgeranordnung mit einem unlösbar mit einer Fahrzeugachse verbundenen Adapterelement und einem an dem Adapterelement montierbaren Bremsträger. Die erfindungsgemäße Bremsträgeranordnung ist insbesondere zur Verwendung für nicht angetriebene Achsen, vorzugsweise für nicht angetriebene Achsen von LKW-Aufliegern bzw. Anhängern geeignet.

Fahrzeugbremsen setzen sich jeweils aus einem mit der Fahrzeugachse fest verbundenen, statischen Bremsenelement sowie einem mit dem an der Fahrzeugachse befestigten radrotierenden Bremsenelement zusammen. Im Falle von Trommelbremsen sind die statischen, an der Fahrzeugachse festgelegten Bremsenelemente die Bremsbacken, welche mit der fest mit dem Rad verbundenen Bremstrommel zusammen wirken. Im Falle von Scheibenbremsen müssen die sogenannten Bremssättel mit der Fahrzeugachse drehfest verbunden werden, die Bremsscheibe bildet dann das mit dem Rad umlaufende, rotierende Bremsenelement. Fest mit der Fahrzeugachse verbunden heißt für das statische Bremsenelement eine Festlegung hinsichtlich des Winkels um die Achse, nicht unbedingt in axialer Richtung. So sind auch schwimmend gelagerte Bremssättel bezüglich des Winkels fest mit der Fahrzeugachse verbunden. Die fest mit der Fahrzeugachse verbundenen Bremsenelemente werden an einem fest auf der Fahrzeugachse montierten Bremsträger festgelegt. Unter einem Bremsträger im Sinne dieser Erfindung soll ein solches Element verstanden werden, welches entweder die Bremsbackenanordnung einer Trommelbremse oder den Bremssattel einer Scheibenbremse trägt.

Beim Aufbau einer Fahrzeugachse, insbesondere einer nicht angetriebenen Achse für einen LKW-Auflieger oder Anhänger, wird im Stand der Technik der Bremsträger fest mit der Fahrzeugachse verschweißt. Dies geschieht bereits in einem sehr frühen Produktionsstadium der Achse bzw. des Fahrgestells, an welches sich weitere Arbeiten wie der Einbau der Achse in das gesamte Fahrgestell sowie der Aufbau der Stoßdämpferanordnungen, des Bremsgestänges und weiterer Fahrgestellkompönenten anschließt. Die Position des Bremsträgers auf der Achse ist abhängig von mehreren Randbedingungen. So gibt es für die später auf der Achse zu montierenden Fahrzeugräder Felgen mit unterschiedlicher sogenannter Einpreßtiefe. Über die Einpreßtiefe der Felge ist zugleich auch die Position der Bremstrommel bzw. Bremsscheibe in Relation zu der Felgenmitte, in der bei montiertem Rad der Achszapfen zu liegen kommt, bestimmt. Felgen unterschiedlicher Einpreßtiefe erfordern somit unterschiedliche axiale Positionen des Bremsträgers auf der Achse. Folglich ist es erforderlich, bereits zu einem frühen Produktionszeitpunkt, an dem der Bremsträger auf der Achse verschweißt wird, den Felgentyp zu kennen, der später auf der Achse montiert werden soll.

Darüber hinaus ist insbesondere bei Scheibenbremsen die Winkellage des Bremsträgers in Bezug auf den Umfang des Achskörpers zu bestimmen, da die Position des Bremssattels in Relation zu weiteren Fahrgestellkomponenten wie beispielsweise Stoßdämpfern und anderen Komponenten festgelegt werden muß, damit es nicht zu räumlichen Überschneidungen kommt.

Das Erfordernis einer frühzeitigen Festlegung der genauen Position des Bremsträgers auf der Achse bedingt eine bereits zu einem frühen Produktionszeitpunkt spezialisierte Herstellung der Achsen und damit einen erhöhten Aufwand auch in der Lagerhaltung. Daher ist es wünschenswert, eine Bremsträgeranordnung zu schaffen, welche eine möglichst späte Festlegung der Position des Bremsträgers auf der Achse ermöglicht.

Aus der WO 01/42676 A1 ist eine zweiteilig aufgebaute Bremsträgeranordnung gemäß dem Oberbegriff des Anspruchs 1 bekannt. Eine Adapterplatte zur Aufnahme eines Bremssattels kann mittels Schraubbolzen an einem Flansch eines Fahrzeugachsengehäuses festgelegt werden. Der zweiteilige Aufbau der aus dieser Druckschrift bekannten Bremsträgeranordnung erlaubt eine präzise Festlegung der Stellung des Bremssattels relativ zu dem Achsflansch. Die aus dieser Druckschrift bekannte Adapterplatte ist eben ausgebildet, mit der Festlegung der Position des Achsflansches ist die axiale Position der Adapterplatte auf der Achse unabänderbar bestimmt. Somit kann die Bremsträgeranordnung der WO 01/42676 A1 lediglich für Felgen einer Einpreßtiefe verwendet werden.

Aus der US 6,305,509 B1 ist eine Bremsträgeranordnung bekannt, die eine Umrüstung einer Scheibenbremse von einer Bauart mit geringerem Bremsscheibendurchmesser auf eine Bauart mit größerem Bremsscheibendurchmesser erlaubt. Hierzu wird an einen achsfesten Befestigungsflansch, an dem normalerweise das Bremsenelement unmittelbar befestigt ist, zunächst ein zusätzliches Bremsträgerelement als Zwischenelement angesetzt, und mit dem Befestigungsflansch verschraubt. An dem zusätzlichen Bremsträgerelement befinden sich Bohrungen, die radial weiter außen liegen, als die Befestigungsbohrungen an dem Befestigungsflansch. An diesen radial weiter außen liegenden Bohrungen wird sodann das eigentliche Bremsenelement befestigt, so daß dieses eine Position weiter radial außen einnimmt, um so mit der radial vergrößerten Bremsscheibe zusammenwirken zu können.

Ausgehend von dem geschilderten Stand der Technik ist es Aufgabe der Erfindung, eine Bremsträgeranordnung der eingangs geschilderten Art dahingehend weiterzuentwickeln, daß sie eine Anpassung der Achse auf eine mit der Achse zu verwendende Felgenart, insbesondere deren Einpreßtiefe, zu einem möglichst späten Produktionszeitpunkt erlaubt.

Zur Lösung der Aufgabe wird vorgeschlagen, daß der Bremsträger in mindestens zwei Montagepositionen an dem Adapterelement so montierbar ist, daß die axiale Lage eines an dem Bremsträger festgelegten Bremsenelementes in bezug auf die Fahrzeugachse je nach Montageposition des Bremsträgers eine andere ist, daß der Bremsträger in einer ersten Ebene einen Flanschabschnitt zum Verbinden mit dem Adapterelement und in einer zweiten, zu der ersten Ebene parallel versetzten Ebene Verbindungsstrukturen zum Verbinden mit einem Bremsenelement aufweist, und daß der Bremsträger sowohl in mindestens einer ersten Ausrichtung als auch in einer zweiten, bezüglich der ersten Ausrichtung um 180° um eine in einer der Ebenen liegende Achse gedrehten und gegebenenfalls um einen Winkel in der Ebene verdrehten Ausrichtung an dem Adapterelement montierbar ist.

Auf diese Weise kann die axiale Position des Bremsenelementes bezüglich der Achse durch einfache Auswahl der Montageposition in mindestens zwei verschiedenen Stellungen festgelegt werden. So können bei geeigneter Konstruktion des Bremsträgers für eine festgelegte Stellung des Adapterelements durch Wahl der Montagerichtung des Bremsträgers Felgen mit unterschiedlichen Einpreßtiefen, beispielsweise Einpreßtiefe 0 und Einpreßtiefe 120, verwendet werden. Im Verlaufe der Fahrgestellherstellung ist es bereits zu einem frühen Zeitpunkt lediglich erforderlich, das Adapterelement mit der Achse zu verbinden, der Bremsträger kann dann zu einem späteren Zeitpunkt montiert werden. Die Entscheidung, in welcher Stellung der Bremsträger auf dem Adapterelement montiert werden soll und damit, welche Felgenart auf der Achse montiert werden soll, kann somit später getroffen werden. Der Herstellungsprozeß für die Achse bzw. für das Fahrgestell wird somit über einen längeren Zeitraum vereinheitlicht, was zu einer Entlastung der Lagerhaltung führt. Der Achsenbau kann gleichsam modular erfolgen, es werden einheitliche Achsen mit in einer Position festgelegtem Adapterelement gefertigt, auf welches Adapterelement in einem späteren Fertigungsschritt ein angepaßter Bremsträger in der anhand der zu verwendenden Felgen und weiterer Randbedingungen ausgewählten Ausrichtung montiert wird.

Indem der Bremsträger in zwei parallel zueinander versetzten Ebenen zum einen den Flanschabschnitt zum Verbinden mit dem Adapterelement, und zum anderen die Verbindungsstrukturen zum Verbinden mit dem Bremsenelement (Bremssattel bzw. Bremsbackenanordnung) aufweist, kann die axiale Position des Bremsenelementes bezüglich der Achse durch einfaches "Umklappen" des Bremsträgers bei in gleicher Position festgelegtem Adapterelement zu zwei verschiedenen Stellungen festgelegt werden. Die Befestigungsebenen müssen nicht notwendigerweise durch die äußeren Strukturen der Befestigungsstruktur gegeben sein, sie können auch z. B. durch die Mittelebene dieser Strukturen definiert sein. Entscheidend ist lediglich, daß aufgrund des so ausgebildeten Versatzes ein "Klappen" des Bremsträgers eine axiale Verschiebung eines an dem Bremsträger befestigenden Bremsenelementes entlang der Fahrzeugachse bewirkt.

Die Verbindungsstrukturen können gemäß einer Weiterbildung der Erfindung durch Öffnungen zur Aufnahme von Befestigungsbolzen gebildet sein. Die Verwendung von durch die Öffnungen geführten Befestigungsbolzen zum Verbinden des Bremsenelementes mit der Verbindungsstruktur erlaubt ein einfaches und lösbares Anbringen des Bremsenelementes an dem Bremsträger. Die Öffnungen können dabei entweder glattwandig zur Durchführung eines mit einer Mutter zu sichernden Befestigungsbolzens oder mit einem Innengewinde zum Einschrauben eines Schraubbolzens ausgebildet sein.

Gemäß einer weiteren Weiterbildung der Erfindung kann der Bremsträger einen massiv ausgebildeten zentralen Bereich mit einer darin ausgebildeten Öffnung zum Hindurchführen des Achszapfens und mit dem in diesem Bereich ausgebildeten Flanschabschnitt aufweisen sowie von dem zentralen Bereich nach außen weisende, an ihren Enden die Verbindungsstruktur tragende Fortsätze. Um den Versatz zwischen der ersten Ebene, in dem der Flanschabschnitt gebildet ist und der zweiten Ebene, die die Verbindungsstrukturen aufweist zu erhalten, wird gemäß einer Weiterbildung der Erfindung vorgeschlagen, daß die Fortsätze Kröpfungen aufweisen. Der Bremsträger ist gemäß dieser Weiterbildung mit anderen Worten kein flaches und ebenes Teil, wie die aus der WO 01/42676 A1 Adapterplatte, sondern weist bezüglich der Ebene des Flanschabschnittes schräg verlaufende Fortsätze auf, die an ihren Enden die in der zweiten, zu der ersten Ebene parallel versetzten Ebene angeordneten Verbindungsstrukturen tragen.

Gemäß einem weiteren Vorschlag der Erfindung können zur weiteren Bildung des Versatzes die Fortsätze um die an den Enden der Fortsätze als Verbindungsstrukturen ausgebildeten Öffnungen herum einseitig des Fortsatzes gebildete, hülsenartige Verlängerungen aufweisen. Diese hülsenartigen Verlängerungen bilden zusätzlich einen axialen Versatz aus, welcher für eine axiale Verschiebung der Ebene der Verbindungsstrukturen bei umgeklapptem Bremsträger sorgt.

Nach einer weiteren Weiterbildung der Erfindung ist vorgesehen, daß das Adapterelement ringförmig ausgebildet ist und einen entlang des Umfanges der Achse verlaufenden Befestigungsflansch zum Festlegen des Bremsträgers aufweist. Die Flanschanordnung des Bremsträgers erfährt so entlang des gesamten Umfanges der Achse an dem Befestigungsflansch des Adapterelements eine Abstützung.

Um eine weitere Freiheit bei der Anordnung des Bremsträgers relativ zur Achse zu erhalten, ist gemäß einer Weiterbildung der Erfindung vorgesehen, daß der Bremsträger in mindestens einer der um 180° um eine in einer der Ebenen liegenden Achse gedrehten Ausrichtung in mindestens zwei um einen Winkel in einer der Ebenen verdrehten Stellungen an dem Adapterelement montierbar ist. Der Bremsträger kann also nicht nur in zwei "umgeklappten" Stellungen, sondern auch in unterschiedlichen Winkelstellungen bezüglich der Achse festgelegt werden. Dies erlaubt eine Anpassung der Position des Bremsträgers und damit der Position der an dem Bremsträger zu montierenden Bremsenelemente in bezug auf weitere in diesem Bereich des Fahrgestells angeordnete Elemente, wie beispielsweise Stoßdämpfer. Um dies zu verwirklichen, wird gemäß einer Weiterbildung der Erfindung vorgeschlagen, daß sowohl in dem Flanschabschnitt als auch in dem Adapterelement Öffnungen zum Durchführen von Befestigungsbolzen ausgebildet sind, wobei die Öffnungen in dem Adapterelement und/oder in dem Flanschabschnitt entlang des Umfanges der Achse zur Winkeleinstellung des montierten Bremsträgers in kleinen Winkelabständen angeordnet sind. Das Adapterelement und der Bremsträger haben mit anderen Worten Öffnungsmuster, die in verschiedenen Winkelstellungen zum Durchführen von Befestigungsbolzen in Deckung gebracht werden können. Dabei kann gemäß einem weiteren Vorschlag der Erfindung das Öffnungsmuster der in dem Adapterelement und/oder in dem Flanschabschnitt ausgebildeten Öffnungen asymmetrisch sein. So kann beispielsweise die Anzahl der entlang des Umfangs der Achse in dem Adapterelement ausgebildeten Öffnungen in bestimmten, für die spätere Montage interessanten Winkelbereichen mit sehr vielen Öffnungen versehen sein, um in diesen Winkelbereichen eine Feinabstimmung der Position des Bremsträgers und damit der an dem Bremsträger zu montierenden Bremsenelemente zu ermöglichen.

Die erfindungsgemäße Bremsträgeranordnung ist prinzipiell für die Aufnahme von Bremssatteln einer Scheibenbremse ebenso geeignet wie für die Aufnahme von Bremsbackenanordnungen einer Trommelbremse. Im Rahmen der Erfindung wird die Verwendung der Bremsträgeranordnung zur Aufnahme eines Bremssattels einer Scheibenbremse bevorzugt.

Weitere Vorteile und Merkmale der Erfindung ergeben sich aus der nachfolgenden Beschreibung von Ausführungsbeispielen anhand der beigefügten Figuren. Dabei zeigen:
- Figur 1: in perspektivischer Explosionsdarstellung ein Ausführungsbeispiel einer erfindungsgemäßen Bremsträgeranordnung,
- Figur 2: in perspektivischer Ansicht die Bremsträgeranordnung aus Figur 1 in zusammengesetztem Zustand,
- Figur 2a: in perspektivischer Ansicht eine Abwandlung einer erfindungsgemäßen Bremsträgeranordnung, bei der der Bremsträger auf der dem Achszapfen abgewandten Seite auf dem Adapterelement aufgesetzt ist,
- Figur 3: in perspektivischer Ansicht den Bremsträger, der in den Figuren 1 sowie 2 gezeigten Bremsträgeranordnung,
- Figur 4: das Ausführungsbeispiel für die Bremsträgeranordnung mit in zwei verschiedenen Ausrichtungen montiertem Bremsträger,
- Figur 4a: in einer der Figur 4 entsprechenden Darstellung das in Figur 2a gezeigte Ausführungsbeispiel für die Bremsträgeranordnung mit in zwei verschiedenen Ausrichtungen montiertem Bremsträger, wobei der Bremsträger einmal an der dem Achszapfen zugewandten Seite und einmal an der dem Achszapfen abgewandten Seite des Adapterelementes montiert ist, und
- Figur 5: eine erfindungsgemäße Bremsträgeranordnung mit aufgesetztem Bremssattel einer Scheibenbremse im Verbund mit weiteren Radelementen.

In den Figuren sind gleiche Teile mit gleichen Bezugszeichen versehen.

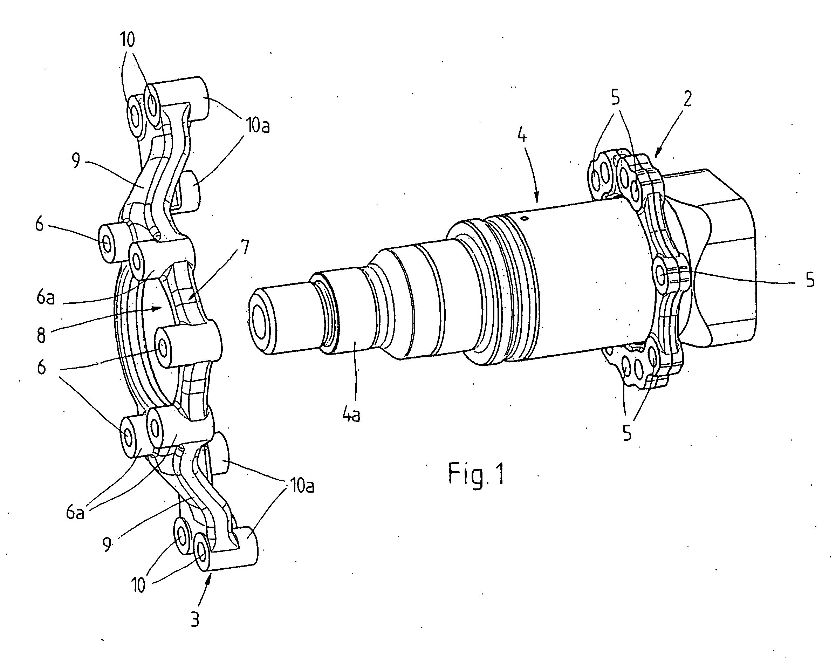

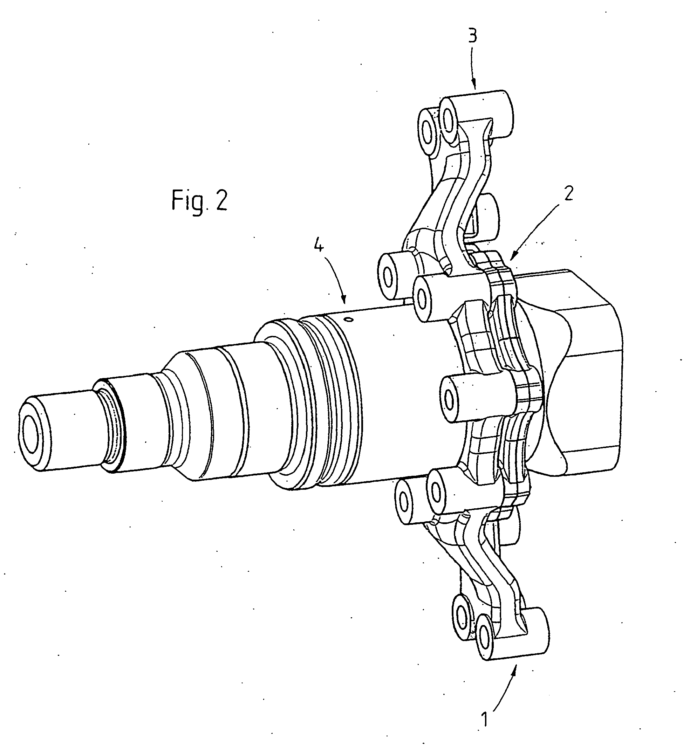

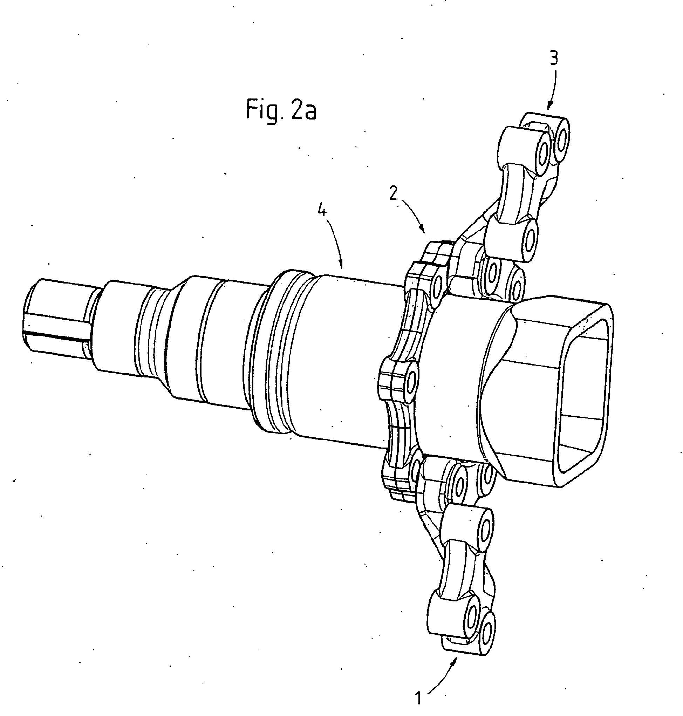

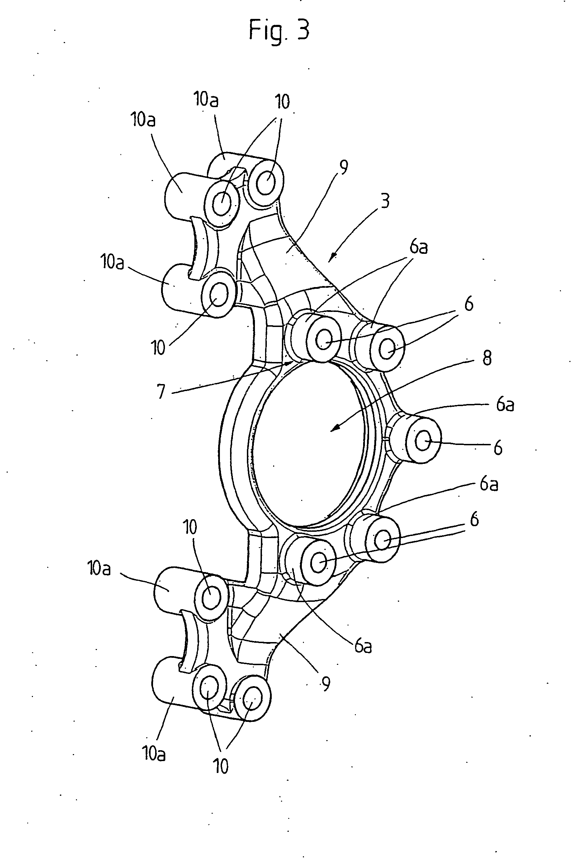

In den Figuren sind ein Ausführungsbeispiele eines erfindungsgemäßen Bremsträgeraufbaus 1 gezeigt. Die Figuren 1 und 2 zeigen dabei den erfindungsgemäßen Bremsträgeraufbau 1 in perspektivischer Darstellung, einmal in Explosionsdarstellung und einmal auf einer Achse 4 montiert. Der Bremsträgeraufbau 1 setzt sich zusammen aus einem fest mit der Achse 4 verbundenen, beispielsweise verschweißten, ringförmigen Adapterelement 2 und einem Bremsträger 3, welcher mit dem Adapterelement 2 verbindbar ist. Das Adapterelement 2 weist eine Reihe von entlang des Umfangs ungleichmäßig verteilten Öffnungen 5 zum Aufnehmen von Befestigungsbolzen (nicht dargestellt) auf. Der Bremsträger, welcher in Figur 3 noch einmal in Alleinstellung gezeigt ist, weist einen zentralen, ringförmig ausgebildeten Bereich auf, welcher in seinem Inneren eine Öffnung 8 zum Hindurchführen des Achszapfens 4a aufweist. Um die Öffnung 8 sind in dem Bremsträger 3 Öffnungen 6 ausgebildet, welche ebenfalls zum Durchführen von Befestigungsbolzen dienen. Die Anordnung der Öffnungen 6 bildet insgesamt eine Flanschanordnung 7 zum Verbinden mit dem Adapterelement 2. Die Öffnungen 6 weisen einseits des ringförmigen, zentralen Bereichs des Adapterelements 3 hülsenartige Verlängerungen 6a auf.

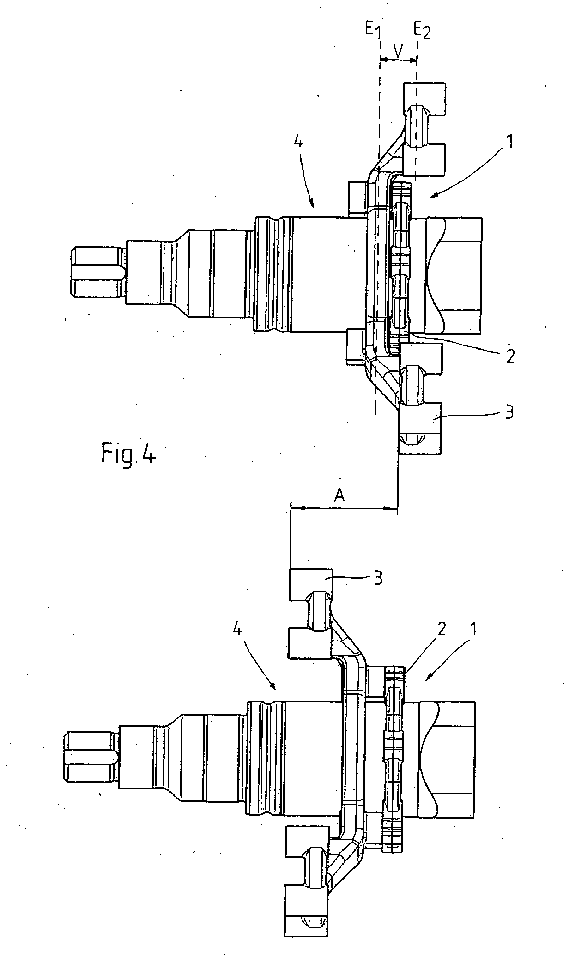

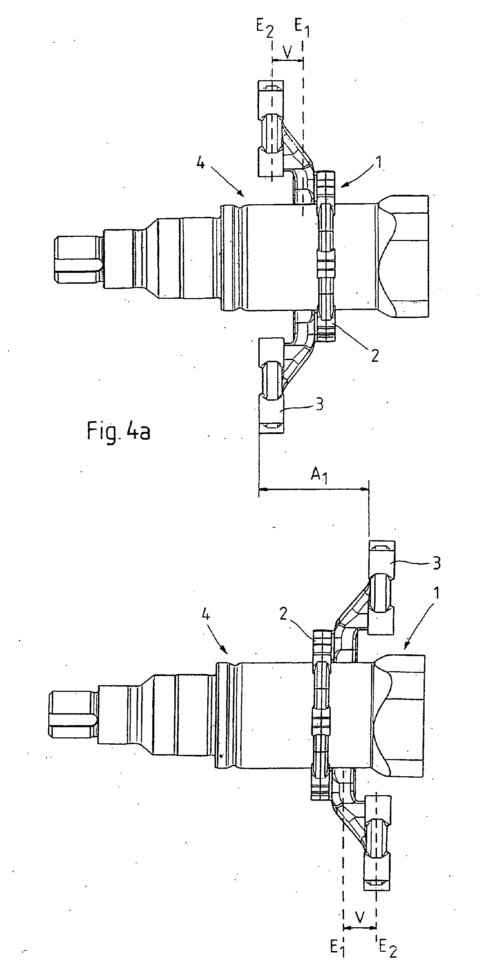

Ausgehend von dem zentralen, ringförmigen Abschnitt des Bremsträgers 3 erstrecken sich zwei nach außen weisende Fortsätze 9, an deren Enden weitere Öffnungen 10 ausgebildet sind als Verbindungsstrukturen zum Festlegen eines Bremsenelementes. Auch die Öffnungen 10 weisen einseits der Fortsätze 9 hülsenartige Verlängerungen 10a auf. Die Fortsätze 9 weisen Kröpfungen auf, so daß sie den Bremsträger 3 aus einer ersten, durch die Flanschanordnung 7 bestimmten Ebene E1 (siehe Figur 4) in eine zweite, durch die Anordnung der Öffnungen 10 am Ende der Fortsätze 9 ausgebildeten Ebene E2 (siehe Figur 4) überführen. Die Ebenen E1 und E2 sind dabei um einen Versatz V parallel verschoben.

Der Bremsträger 3 kann an dem ringförmigen Adapterelement 2 in zwei bezüglich der Ebenen E1 bzw. E2 um 180° gedrehten Ausrichtungen angebracht werden. Dies ist in Figur 4 verdeutlicht. In Figur 4 ist gut zu erkennen, wie sich aufgrund der Kröpfungen der Fortsätze 9 sowie der einseitig an den Öffnungen 6 bzw. 10 ausgebildeten, hülsenartigen Verlängerungen 6a bzw. 10a ein Abstand A zwischen den Auflageflächen für ein an dem Bremsträger 3 festzulegendes Bremsenelement in den beiden gezeigten Ausrichtungen ergibt. In beiden in Figur 4 dargestellten Fällen ist das Adapterelement 2 an gleicher Position an der Achse 4 festgelegt, lediglich der Bremsträger 3 ist in zwei "umgeklappten" Stellungen angeordnet. Der sich auf diese Weise ergebenden Abstand A kann bei geeigneter Dimensionierung des Bremsträgers 3 genau der für die Wahl von Felgen mit unterschiedlicher Einpreßtiefe erforderlichen axialen Verschiebungen des Bremsenelementes entsprechen.

In Figur 2a ist in einem abgewandelten Ausführungsbeispiel eine weitere Möglichkeit dargestellt, die Bremsträger 3 an dem Adapterelement 2 zu montieren. Anstelle den Bremsträger 3, wie in Figur 2 gezeigt, auf der dem Achszapfen zugewandten Seite des Adapterelementes 2 zu montieren, kann der Bremsträger 3 an dem Adapterelement 2 auch von der dem Achszapfen abgewandten Seite her, gleichsam von hinten, montiert werden. Hierzu ist es allerdings erforderlich, daß der bremsträger 3 entlang seiner Flanschanordnung 7 nicht geschlossen ist, sondern eine Öffnung aufweist, mittels der er über den Achskörper der Achse 4 geführt werden kann.

Bereits durch die Möglichkeit, den Bremsträger 3 von zwei Seiten her an dem Adapterelement 2 anzuflanschen, ergibt sich die Möglichkeit, einen Versatz auszubilden. Dabei ist es nicht erforderlich, daß der Bremsträger 3, wie im Ausführungsbeispiel gezeigt, einen Versatz zwischen den Enden der hier gekröpft dargestellten Fortsätze 9 und der Flanschanordnung 7 aufweist. Auch mit einem eben ausgebildeten Bremsträger 3 kann bei ausreichender Längsausdehnung des Adapterelementes 2 in Richtung der Achse 4 ein Anbringen des Bremsträgers 3 in zwei Positionen erreicht werden, wodurch ein an dem Bremsträger 3 zu befestigendes Bremsenelement axial deutlich voneinander beabstandete Positionen erhält. Durch die gekröpfte Ausbildung ergeben sich weitere Kombinationsmöglichkeiten, so daß durch Ausrichtung des Bremsträgers 3 einerseits und andererseites durch die Wahl der Seite des Adapterelementes 2, an dem der Bremsträger 3 angeordnet wird, mehr als nur zwei axiale Positionen für ein an dem Bremsträger 3 zu befestigendes Bremsenelement erzielbar sind.

In Figur 4a ist dargestellt, wie zusätzlich zu der in Figur 4 dargestellten Ausrichtung des Bremsträgers 3 durch die unterschiedliche Anordnung des Bremsträgers 3 auf der dem Achsschenkel zugewandten Seite bzw. auf der dem Achsschenkel abgewandten Seite des Adapterelementes 2 ein axialer Abstand A₁ für an dem Bremsträger 3 montierte, gleichartige Bremsenelemente erzielt werden kann.

Auf diese Weise kann in einem frühen Produktionsstadium der Achse bzw. des Fahrgestells das Adapterelement 2 an einer vorbestimmten Stelle der Achse festgelegt werden, der Bremsträger 3 kann zu einem sehr viel späteren Zeitpunkt der Produktion in bedarfsabhängiger Ausrichtung montiert werden. Es ergibt sich somit ein modularer Aufbau der Bremsträgeranordnung, welcher in einem vereinheitlichten Fertigungsverfahren mit vereinfachter Lagerhalterung bedarfsgerecht an die verwendete Felge angepaßt werden kann.

Eine weitere Verbesserung der Anpassungsmöglichkeiten ergibt sich durch das entlang des Umfangs des Adapterelementes 2 ausgebildete Öffnungsmuster mit Öffnungen 5. Diese sind nicht gleichmäßig entlang des Umfanges angeordnet, sondern weisen in bestimmten Bereichen eine erhöhte Anzahl von dicht nebeneinander angeordneten Öffnungen 5 auf. Der Bremsträger 3 kann auf dem Adapterelement 2 bei einer gewählten Ausrichtung in verschiedenen Winkelstellungen angeordnet werden. Die Bereiche des Adapterelements 2 mit einer.erhöhten Anzahl von Öffnungen 5 sind diejenigen Bereiche, in denen eine Feinabstimmung der Winkelstellung wünschenswert ist. Über diese Möglichkeit kann der Bremsträger 3 abhängig vom Raumangebot im Fahrgestell, welches durch weitere, im Bereich des Bremsträgers vorgesehene Komponenten, wie beispielsweise Stoßdämpfer, eingeschränkt ist, ausgerichtet werden.

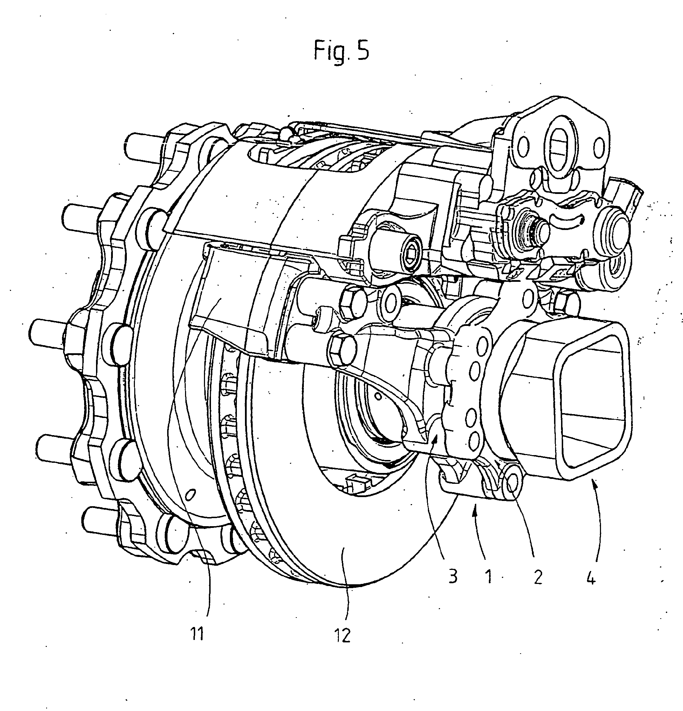

In Figur 5 schließlich ist der erfindungsgemäße Bremsträgeraufbau 1 im Verbund mit einer Scheibenbremse gezeigt. An dem Bremsträger 3 ist ein Bremssattel 11 befestigt, welcher mit einer Bremsscheibe 12 einer Scheibenbremsenanordnung zum Abbremsen eines nicht gezeigten Rades zusammenwirkt.

Bezugszeichenliste:
- 1: Bremsträgeranordnung
- 2: Adapterelement
- 3: Bremsträger
- 4: Achse
- 4a: Achszapfen
- 5: Öffnung
- 6: Öffnung
- 6a: Verlängerung
- 7: Flanschanordnung
- 8: Öffnung
- 9: Fortsatz
- 10: Öffnung
- 10a: Verlängerung
- 11: Bremssattel
- 12: Bremsscheibe

- E₁: Ebene
- E₂: Ebene
- V: Versatz
- A: axialer Abstand
- A₁: axialer Abstand

## Patentansprüche

1. Zweiteilig aufgebaute Bremsträgeranordnung mit einem unlösbar mit einer Fahrzeugachse (4) verbundenen Adapterelement (2) und einem an dem Adapterelement (2) montierbaren Bremsträger (3),
**dadurch gekennzeichnet,**
**dass** der Bremsträger (3) in mindestens zwei Montagepositionen an dem Adapterelement (2) so montierbar ist, dass die axiale Lage eines an dem Bremsträger (3) festgelegten Bremsenelementes (11) in Bezug auf die Fahrzeugachse je nach Montageposition des Bremsträgers (3) eine andere ist,
**dass** der Bremsträger (3) in einer ersten Ebene (E₁) einen Flanschabschnitt (7) zum Verbinden mit dem Adapterelement (2) und in einer zweiten, zu der ersten Ebene (E₁) parallel versetzten Ebene (E₂) Verbindungsstrukturen (10) zum Verbinden mit einem Bremsenelement (11) aufweist,
und **dass** der Bremsträger (3) sowohl in mindestens einer ersten Ausrichtung als auch in einer zweiten, bezüglich der ersten Ausrichtung um 180° um eine in einer der Ebenen (E₁, E₂) liegende Achse gedrehten und gegebenenfalls um einen Winkel in der Ebene (E₁, E₂) verdrehten Ausrichtung an dem Adapterelement (2) montierbar ist.

2. Bremsträgeranordnung nach Anspruch 1, **dadurch gekennzeichnet, dass** die Verbindungsstrukturen (10) durch Öffnungen zur Aufnahme von Befestigungsbolzen gebildet sind.

3. Bremsträgeranordnung nach einem der Ansprüche 1 oder 2, **dadurch gekennzeichnet, dass** der Bremsträger (3) einen massiv ausgebildeten zentralen Bereich mit einer darin ausgebildeten Öffnung (8) zum Hindurchführen des Achszapfens (4a) und dem in diesem Bereich ausgebildeten Flanschabschnitt (7) sowie von dem zentralen Bereich nach außen weisende, an ihren Enden die Verbindungsstrukturen (10) tragende Fortsätze (9) aufweist.

4. Bremsträgeranordnung nach Anspruch 3, **dadurch gekennzeichnet, dass** die Fortsätze (9) zur Ausbildung des Versatzes (V) Kröpfungen aufweisen.

5. Bremsträgeranordnung nach einem der Ansprüche 3 oder 4, **dadurch gekennzeichnet, dass** die Fortsätze (9) um die an den Enden der Fortsätze (9) als Verbindungsstrukturen (10) ausgebildeten Öffnungen herum einseitig der Fortsätze (9) gebildete, hülsenartige Verlängerungen (10a) aufweisen.

6. Bremsträgeranordnung nach einem der Ansprüche 1 bis 5, **dadurch gekennzeichnet, dass** das Adapterelement (2) ringförmig ausgebildet ist und einen entlang des Umfanges der Achse (4) verlaufenden Befestigungsflansch zum Festlegen des Bremsträgers (3) aufweist.

7. Bremsträgeranordnung nach einem der Ansprüche 1 bis 6, **dadurch gekennzeichnet, dass** der Bremsträger (3) in mindestens einer der um 180° um eine in einer der Ebenen (E₁, E₂) liegenden Achse gedrehten Ausrichtungen in mindestens zwei um einen Winkel in einer der Ebenen (E₁, E₂) verdrehten Stellungen an dem Adapterelement (2) montierbar ist.

8. Bremsträgeranordnung nach einem der voranstehenden Ansprüche, **dadurch gekennzeichnet, dass** der Bremsträger (3) ein Bremsträger (3) zur Aufnahme eines Bremssattels (11) einer Scheibenbremse ist.

## Claims

1. A brake anchor plate arrangement constructed in two parts and having an adapter element (2) connected to a vehicle axle (4) in a non-detachable manner and a brake anchor plate (3) capable of being mounted on the adapter element (2),
**characterized in that**
the brake anchor plate (3) is capable of being mounted in at least two mounting positions on the adapter element (2) in such a way that the axial position of a brake element (11) fixed to the brake anchor plate (3) with respect to the vehicle axle is a different one depending upon the mounting position of the brake anchor plate (3),
in a first plane (E₁) the brake anchor plate (3) has a flange portion (7) for connection to the adapter element (2) and in a second plane (E₂) offset parallel to the first plane (E₁) it has connecting structures (10) for connection to a brake element (11),
and the brake anchor plate (3) is capable of being mounted on the adapter element (2) both in at least one first orientation and in a second orientation which is rotated with respect to the first orientation by 180° about an axis situated in one of the planes (E₁, E₂) and which is optionally twisted by an angle in the plane (E₁, E₂).

2. A brake anchor plate arrangement according to Claim 1, **characterized in that** the connecting structures (10) are formed by openings for receiving fastening pins.

3. A brake anchor plate arrangement according to one of Claims 1 or 2, **characterized in that** the brake anchor plate (3) has a central region constructed in a solid manner with an opening (8) formed therein for the passage of the axle journal (4a) and the flange portion (7) formed in this region as well as extensions (9) directed towards the outside from the central region and carrying at their ends the connecting structures (10).

4. A brake anchor plate arrangement according to Claim 3, **characterized in that** the extensions (9) have crank portions in order to form the offset (V).

5. A brake anchor plate arrangement according to one of Claims 3 or 4, **characterized in that** the extensions (9) have sleeve-like prolongations (10a) formed on one side of the extensions (9) around the openings designed in the form of connecting structures (10) at the ends of the extensions (9).

6. A brake anchor plate arrangement according to any one of Claims 1 to 5, **characterized in that** the adapter element (2) is designed in the form of a ring and has a fastening flange extending along the periphery of the axis (4) in order to fasten the brake anchor plate (3).

7. A brake anchor plate arrangement according to any one of Claims 1 to 6, **characterized in that** the brake anchor plate (3) is capable of being mounted on the adapter element (2) in at least one of the orientations rotated by 180° about an axis situated in one of the planes (E₁, E₂) in at least two settings twisted by an angle in one of the planes (E₁, E₂).

8. A brake anchor plate arrangement according to any one of the preceding Claims, **characterized in that** the brake anchor plate (3) is a brake anchor plate (3) for receiving a brake calliper (11) of a disc brake.

## Revendications

1. Système de plateau de frein réalisé en deux parties comportant un élément adaptateur (2) relié de manière inamovible à un essieu de véhicule (4) et un plateau de frein (3) pouvant être monté sur l'élément adaptateur (2), **caractérisé en ce que** le plateau de frein (3) peut être monté sur l'élément adaptateur (2) dans au moins deux positions de montage de telle sorte que la position axiale d'un élément de frein (11) fixé sur le plateau de frein (3) change par rapport à l'essieu de véhicule en fonction de la position de montage du plateau de frein (3), **en ce que** le plateau de frein (3) comporte, sur un premier plan (E₁), une section de bride (7) pour la liaison à l'élément adaptateur (2) et, sur un second plan (E₂) parallèlement décalé par rapport au premier plan (E₁), des structures de liaison (10) pour la liaison à un élément de frein (11) et **en ce que** le plateau de frein (3) peut être monté sur l'élément adaptateur (2) à la fois dans au moins une première orientation et également dans une seconde orientation tournée, par rapport à la première orientation, de 180° autour d'un axe situé sur l'un des plans (E₁, E₂) et tournée le cas échéant d'un angle sur le plan (E₁, E₂).

2. Système de plateau de frein selon la revendication 1, **caractérisé en ce que** les structures de liaison (10) sont formées d'orifices servant à loger des boulons de fixation.

3. Système de plateau de frein selon l'une quelconque des revendications 1 ou 2, **caractérisé en ce que** le plateau de frein (3) comporte une zone centrale réalisée de manière massive pourvue d'un orifice (8) réalisé à l'intérieur pour l'insertion du tourillon d'arbre (4a) et de la section de bride (7) réalisée dans cette zone ainsi que des prolongements (9) s'étendant vers l'extérieur à partir de la zone centrale, portant les structures de liaison (10) sur leurs extrémités.

4. Système de plateau de frein selon la revendication 3, **caractérisé en ce que** les prolongements (9) présentent des coudes pour la réalisation du déport (V).

5. Système de plateau de frein selon l'une quelconque des revendications 3 ou 4, **caractérisé en ce que** les prolongements (9) comportent, autour des orifices réalisés sur les extrémités des prolongements (9) en tant que structures de liaison (10), des extensions (10a) à mode de douilles, réalisées d'un seul côté des prolongements (9).

6. Système de plateau de frein selon l'une quelconque des revendications 1 à 5, **caractérisé en ce que** l'élément adaptateur (2) est réalisé en forme d'anneau et comporte une bride de fixation, s'étendant le long de la circonférence de l'essieu (4), pour maintenir le plateau de frein (3).

7. Système de plateau de frein selon l'une quelconque des revendications 1 à 6, **caractérisé en ce que** le plateau de frein (3) peut être monté sur l'élément adaptateur (2) dans au moins l'une des orientations tournées de 180° autour d'un axe situé sur l'un des plans (E₁, E₂), dans au moins deux positions tournées d'un angle sur l'un des plans (E₁, E₂).

8. Système de plateau de frein selon l'une quelconque des revendications précédentes, **caractérisé en ce que** le plateau de frein (3) est un plateau de frein (3) servant à loger l'étrier (11) d'un frein à disques.
